# EUROPEAN PATENT SPECIFICATION

(11) **EP 4 220 316 B1**
(45) Date of publication and mention of the grant of the patent: **10.06.2026**
(21) Application number: 22154558.5
(22) Date of filing: 01.02.2022
(51) Int. Cl.: G05B 19/05, G05B 17/02, G06Q 50/04, G05B 19/418

(54) **SYSTEM ENGINEERING TOOLS AND METHODS FOR INDUSTRIAL AUTOMATION**
SYSTEMTECHNISCHE WERKZEUGE UND VERFAHREN ZUR INDUSTRIELLEN AUTOMATISIERUNG
OUTILS D'INGÉNIERIE DE SYSTÈME ET PROCÉDÉS D'AUTOMATISATION INDUSTRIELLE

(43) Date of publication of application: 02.08.2023
(73) Proprietor: ABB SCHWEIZ AG, 5400 Baden (CH)
(72) Inventor: GRUENER, Sten, 69514 Laudenbach (DE); HEUSCHKEL, Jens, 64293 Darmstadt (DE)
(74) Representative: Maiwald GmbH

(56) References cited:
- US-A1- 2018 224 821
- US-A1- 2021 089 276
- US-A1- 2021 096 543
- US-A1- 2021 397 171

## Description

### FIELD OF THE INVENTION

The invention relates to system engineering tools and methods for industrial automation systems.

### BACKGROUND

Standardization efforts in the field of industrial process automation aim to facilitate the configuration and monitoring of equipment from various manufacturers by providing transparency of device information. Increased transparency, however, is concomitant with an overwhelming amount of available device information which needs to be understood and interpreted correctly by application, commissioning, and maintenance personnel. Increasing network configuration flexibility furthermore increases the risk of misconfiguration and adds to the already existing complexity of network configuration.

US 2021/089276 A1 describes an industrial domain-specific language (DSL) that allows control programming to be written using features catered to the industrial domain.

### SUMMARY

It would therefore be desirable to assist automation systems engineers by providing tools and workflows for configuring and monitoring equipment from various manufacturers in industrial automation systems. Thus, in a first aspect of invention, there is provided a computer-implemented system engineering method for an industrial automation system according to independent claim 1. Optional features of the method are set forth in the appended dependent claims in the following examples.

According to a second aspect, there is provided a computer-implemented system engineering tool configured to perform the method of the first aspect.

According to a third aspect, there is provided a computer-readable medium comprising instructions which, when executed by a computing system, enable or cause the computing system to perform the method of the first aspect.

The systems and methods disclosed herein establish an optimal balance between lightweight tooling and low engineering effort and enable powerful automated configuration utilizing relevant communication standards, by assisting domain experts to design functional entities and signal flows and deploy them within the physical system, while providing for automatic selection and matching of functional entities and signals, and handling functional and non-functional requirements. Thus, a "system-view" configuration method and tool are provided for installations, particularly those using the OPC UA FX model. The systems and methods disclosed herein reduce commissioning effort and enable offline system engineering around the whole powertrain. The abstract application models described herein can provide structured input for data science applications, digital twin, condition monitoring, etc.

The term "application" as used herein is defined as an application to be executed by one or more automation components of an industrial automation system.

The term "automation component" as used herein denotes hardware or software entities which exchange data over a communications network of an industrial automation system, for example actuators, sensors, PLCs, and so on. Automation components may alternatively be referred to as communication participants, and may comprise field devices or controllers of the industrial automation system, or parts thereof. The skilled person will understand that the term "automation component" is used in the context of field level communications (FLC) standards to denote the communication participants. The FLC device model furthermore provides for separation of functionality and hardware: a "functional entity" (FE) denotes certain functionality of an automation component (AC) without specifying whether it is operated in a modular or rigid structure, in a controller, or on a device (e.g. a drive), whereas an "asset" contains all hardware-related information for the AC, including its structure, communication interfaces, and firmware. These terms are used herein for convenience. It will be understood, however, that the present disclosure is not limited to any particular standard and that any overlap in terminology exists purely for the purpose of illustration.

"Concrete" is used herein to refer to non-abstract entities. For example, whereas an abstract FE does not relate to any specific hardware, a concrete FE relates to specific hardware. As such, any antonym of "abstract" may be used in place of "concrete".

The term "module" as used herein may be replaced by "system", "circuitry", "component", and so on, according to the specific implementation.

The invention may include one or more aspects, examples or features in isolation or combination whether or not specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
Fig. 1 illustrates a system engineering tool according to the present disclosure;
Fig. 2 illustrates a graphical representation of an abstract application model;
Fig. 3 shows the abstract application model of fig. 2 expanded to include alternative mappings to physical plant equipment;
Fig. 4 shows the non-limiting example of fig. 3 expanded to include communication options for the two alternative mappings; and
Fig. 5 illustrates a computing system that can be used in accordance with the systems and methods disclosed herein.

### DETAILED DESCRIPTION

Industrial process automation systems are converging towards the use of IP-based communication protocols for vertical (e.g. controller-to-MES or ERP system) and horizontal (e.g. controller-to-controller and controller-to-device) communication. In particular, OPC UA communication technology provides rich information modelling (IM) capability and is associated with a large ecosystem of domain-specific models called companion specifications. Companion specifications differ in their level of detail and can be referenced by each other, relying on object-oriented modelling capabilities of OPC UA IM such as type-inheritance and polymorphism. For example, the device integration (DI) companion specification OPC 10000-100 provides basic object and data types for generic device integration use cases. Building on DI, the FX (Field-level eXchange) model (OPC 10000-81) provides methods and object structures to decompose a particular device under consideration into abstract "Assets" and "Functional Entities" (FEs) which can be configured and which exchange data with further FEs. On top of the FX model, several domain specifications represent equipment classes (e.g. a frequency converter) in a standardized way. For example, a drive can be decomposed into multiple assets like "Power Stage", "DC Link" and can be combined with further assets along the powertrain like "Motor" and "Brake". These standards aim to eliminate vendor-specific configuration tools and formats in favour of OPC UA, thereby enabling a holistic communication interface for any industrial device, especially drives. "Holistic" means using the same field device interface protocol and IM for commissioning tasks such as: device localization (locating its IP endpoint); device identification (identifying device identity such as serial number); generic device parameter engineering or download of pre-configured parameter sets obtained from a simulation (e.g. using Virtual Drive); engineering (creation/modification) of exposed FEs on a device depending on the application; and initializing device-to-device and controller-to-device communication streams, based on specific application; as well as operations tasks such as: monitoring of various aspects of the device (electrical and physical parameters, parameters related to communication such as jitter, loss, clock synchronization etc., parameters related to the application like sync state of axes in a multi-axis machine); and reconfiguration of the application and its communication based on internal or external events e.g. change of the product to be produced by the manufacturing system.

Increased transparency and standardization of device information give rise to a variety of possibilities for monitoring and reconfiguring subsystems of devices produced by various manufacturers. The increased transparency, unfortunately, also leads to an overwhelming amount of available information (FEs, signals, etc.) which needs to be understood and interpreted correctly by application, commissioning, and maintenance personnel. Increasing network configuration flexibility increases the danger of misconfiguration and adds to the already existing complexity of device configuration.

The present disclosure therefore provides a system engineering tool for configuring and monitoring not only single devices but also whole powertrains and the decentralized communication between devices and other peers in the field-communication network.

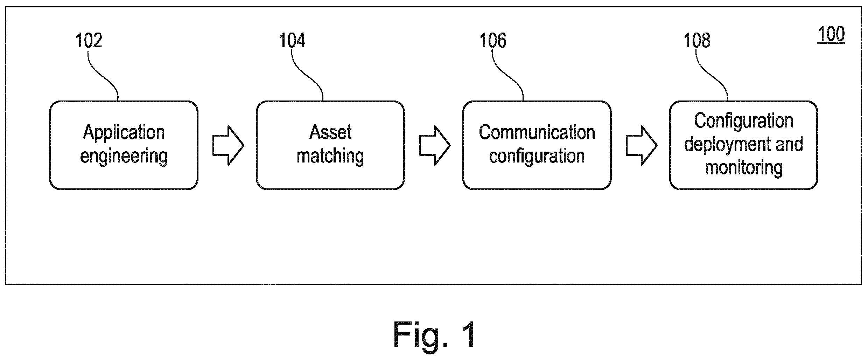

Fig. 1 is a block diagram illustrating the functionality of the system engineering tool 100. The system engineering tool 100 is suitable for use with decentralized field level communication (FLC) networks and enables configuring decentralized communication between peers in the field communication network of an industrial automation system. The system engineering tool 100 comprises one or more of an application engineering module 102, an asset matching module 104, a communication configuration module 106, and a configuration deployment and monitoring module 108. The system engineering tool 100 may be implemented as a software package or service for execution by a computing system, such as the computing system 500 described herein. The computing system may be the MO gateway (an edge gateway) on premise, for example.

The application engineering module 102 enables the user (e.g. an application engineer or team) to create an abstract application model for an application to be executed by the industrial automation system. The abstract application model represents signal flow between functional entities and may comprise elements representing functional entities, elements representing inputs and outputs of the functional entities, and elements representing signal flow between the inputs and outputs. Functional entities may be nested. The abstract application model may comprise graphical elements providing a graphical representation of the application. The application engineering module 102 may provide a library of user-selectable elements for inclusion in the abstract application model. Elements of the abstract application model may correspond to entity types of an information model provided by a relevant standard, so as to provide model-based design of the application model.

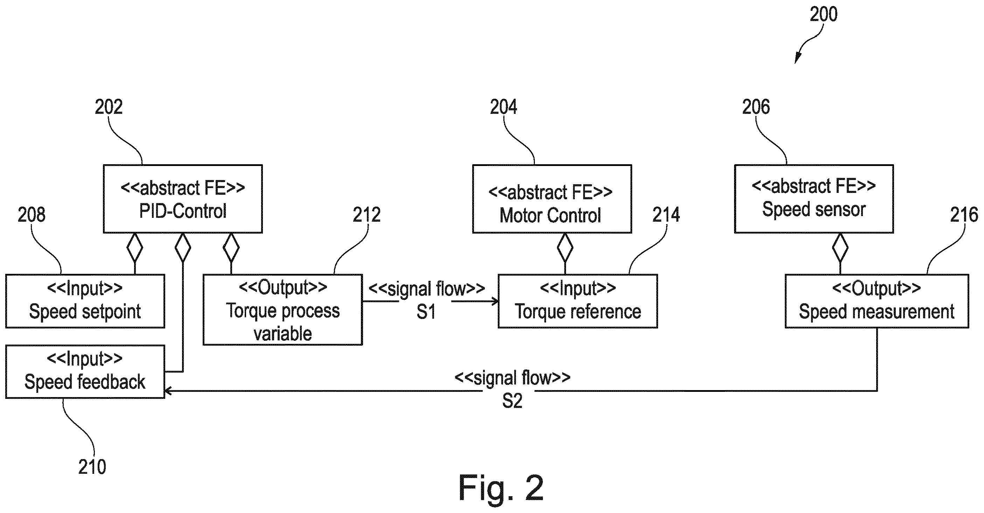

Fig. 2 shows a graphical representation of an abstract application model 200, which in this non-limiting example is a high-level control loop description for a speed control, in which a closed-loop-controller is used to regulate the torque of a motor using sensed motor rotation speed as feedback. To create the model 200, the engineer picks several abstract FEs from a library of predefined manufacturer-specific or generic FEs, instantiates them, sets parameters and establishes desired signal flow between the inputs and outputs of the FEs. As shown in Fig. 2, the model 200 comprises abstract FEs for a PID controller 202, a motor control 204, and a speed sensor 206. The PID controller 202 receives as input a speed setpoint 208 and speed feedback 210, and produces as output a torque process variable 212. The motor control 204 receives as input the torque process variable 212, as a torque reference 214. The speed sensor 206 produces as output a speed measurement 216, which is provided to the PID controller 202 as the speed feedback 210. Where data is to be exchanged between abstract FEs, the engineer creates a signal flow, such as signal flow S1 from the output 212 of the PID controller 202 to the input 214 of the motor control 204, and signal flow S2 from the output 216 of the speed sensor 206 to the input 210 of the PID controller 202.

By "abstract FE" is meant here that the FE is not yet associated with any specific instance of physical plant equipment. It will be understood that the physical devices in the industrial automation system may be associated with functional entities (that is, entities in an information model) describing actual functionality of the physical plant. Therefore, as used herein, the term "abstract FE" refers to an FE which is not (yet) associated with any specific instance of physical plant equipment, whereas "concrete FE" is used to denote FEs that are associated with specific instances of physical plant equipment. In the examples described herein, the abstraction level is the same as that of the OPC UA FX model and its companion specifications, i.e., "Assets" and "Functional Entities". It is to be understood, however, that the present disclosure is not limited to any particular standard.

Alongside the model 200, or as part of it, one or more requirements may be specified, for example manually by the engineer or automatically according to the application being engineered. The requirements may be functional and/or non-functional requirements defined for the abstract FEs and signal flow. The requirements may relate to the timeliness and/or quality of data required by the functional entities. The requirements may comprise application execution requirements, including for example cycle time, or signal flow requirements, specified in terms of e.g. loss, jitter, delay. The requirements may be defined in terms of values or ranges of values of parameters. The requirements may comprise performance requirements. In the non-limiting example shown in Fig. 2, requirements may be specified in terms of Kp, Ki, and Kd parameters for the PID controller 202, as well as a frequency of calculation execution, for example as a range, e.g. [100, 500] ms, meaning that the physical PID controller of the industrial automation system which is eventually used to implement the abstract PID controller 202 needs to execute with a cycle time between 100 and 500 ms. By way of further example, signal flow requirements may be specified for the signal flows S1 and S2, for example a desired jitter of at most 10 ms (i.e. in the range [0, 10] ms), or a desired delivery period matching the PID controller execution cycle time.

It will be understood that the application engineering phase of the workflow can be performed offline with no connection to physical equipment or infrastructure necessary.

The asset matching module 104 performs asset matching, comprising mapping the functional entities of the user-created abstract application model to available automation components of the industrial automation system and mapping the signal flow to available network infrastructure. Asset matching may comprise performing asset discovery to discover available automation components and/or network infrastructure in the industrial automation system. The asset discovery may be performed manually or automatically (using automated discovery mechanisms such as OPC UA LDS/LDE-ME/GDS). Asset matching may comprise comparing the abstract application model to data specifying available automation components, for example with reference to one or more functional entities for physical equipment of the industrial automation system. Asset matching may comprise identifying automation components which are communication-enabled. Asset matching comprises identifying possible matches and optionally certain matches between functional entities of the abstract application model and available automation components. Certain matches relate to fixed functionality of automation components and possible matches relate to optional functionality. Any suitable algorithm can be used to perform the asset matching. For example, an algorithm for mapping the functional entities of the abstract application model to available automation components of the industrial automation system may use one or more of: name matching; type matching; heuristic functions; entity relationships in a relevant information model; plant topology data.

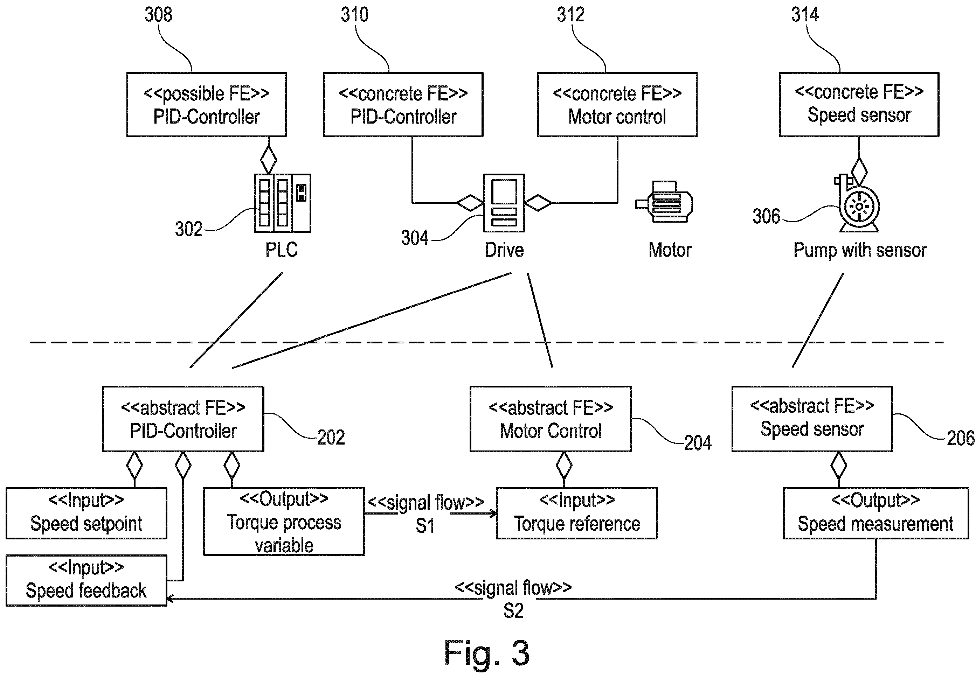

Fig. 3 shows the abstract application model 200 of fig. 2 after performing asset matching to identify available physical automation components and match the abstract FEs to them. In this non-limiting example, three physical communication-enabled automation components are discovered: a PLC 302, a drive 304 for a motor, and a pump 306 with embedded sensor. Each automation component, being actual hardware, is represented by one or more respective concrete FEs. In this example, the PID controller functionality of the PLC 302 is represented by FE 308, the PID controller functionality of the drive 304 by FE 310, the motor control functionality of the drive 304 by FE 312, and the speed sensor of the pump 306 by FE 314. The FEs 308-314 are concrete FEs relating to real instances of physical equipment. The dashed horizontal line in fig. 3 delineates abstract FEs in the lower part of the figure from concrete FEs in the upper part. Mappings are indicated in fig. 3 as solid lines crossing the dashed line.

By comparing data defining the engineered application with data defining available physical equipment, the asset matching module 104 deduces mappings of abstract FEs to concrete FEs. "Possible FE" as used in fig. 3 denotes a possible mapping from an abstract FE to a concrete FE. In the non-limiting example shown in fig. 3, the PID controller FE 308 for the PLC 302 is identified as a possible match for the PID controller FE 202. The other matches shown in fig. 3 are certain matches. Certain matches may be identified when the concrete FEs relate to fixed functionality of devices, for example, the drive 304 when implemented as an ACS 880 drive may provide a PID controller which is built in to its firmware. Possible matches may be identified when concrete FEs relate to possible or optional functionality which a device can provide. For example, the PLC 302 may implement any controller logic using built-in or custom written PLC-code (or a combination of both), and as such may be used to implement the PID controller 202.

Identifying certain matches to concrete FEs may be performed using various techniques utilizing the OPC UA information model of the device with which the concrete FEs are associated. Certain matches to concrete FEs may be identified based on one or more of: name matching and regular expression matching based on name information; type information included in the OPC UA information model; heuristics including experience of project engineers that are saved in the tool 100; topological relations between FEs and Assets within the OPC UA FX model, e.g. parent-child or sibling information for possibly nested FEs; spatial/plant topology if available.

Identifying possible matches to concrete FEs may be performed using manual models of available abstract FEs or predefined associations. For example, possible matches may be identified based on equipment type, e.g. ACQ580 has the possibility to enable "pump cleaning" FE on demand. Additionally or alternatively, possible matches may be identified based on equipment class, e.g. a PLC (which may be identified as such if it contains a PLCopen OPC UA + PLC) can be used to realize any "Controller" FE.

Where multiple mappings are found, as is the case in fig. 3 for FE 202, the mappings may optionally be listed or ranked and presented to the engineer for selection. The asset matching module 104 may be configured to rank or automatically select mappings according to predetermined criteria, for example one or more KPIs.

The asset matching module 104 is further configured to perform signal mapping to map signals used by the functional entities of the abstract application model with those used by the available automation components. An algorithm for performing the signal mapping may use one or more of: signal names; variable types ("VariableTypes" in the OPC UA IM); data types ("DataTypes"); semantic signal data (possibly embedded in OPC UA using dictionary references); signal physical unit dimensioning (based on EURange attributes of OPC UA signals); heuristic functions (based on previous proven signal mappings for known equipment); topological relations of variables, functional entities, and assets. The asset matching module 104 may suggest a mapping from an abstract FE to a concrete FE only when the concrete FE fulfils all signal requirements of the abstract FE.

Signal mapping can be used in conjunction with the FE mapping, using the so calling "duck-typing" paradigm of object-oriented software design: the concrete FE is suitable for an abstract FE mapping if it fulfils all signal requirements of the abstract FE.

The asset matching module 104 may furthermore perform requirement matching to ascertain that the available automation components and network infrastructure are capable of meeting one or more requirements, such as those described herein. Thus, after performing FE and signal mapping, non-functional requirements such as execution time for the PID controller may be checked to ascertain that the application can be executed as expected.

The communication configuration module 106 configures the automation components and the network infrastructure to execute the application and implement its signal flow. Determining the communication configuration may comprise interacting with the network infrastructure to negotiate one or more possible implementations of the signal flow. The negotiating may comprise determining one or more time slots, offsets, or priority classifications for the signal flow. The communication configuration module 106 may map the abstract signal flow to the available network infrastructure based on the established signal mappings.

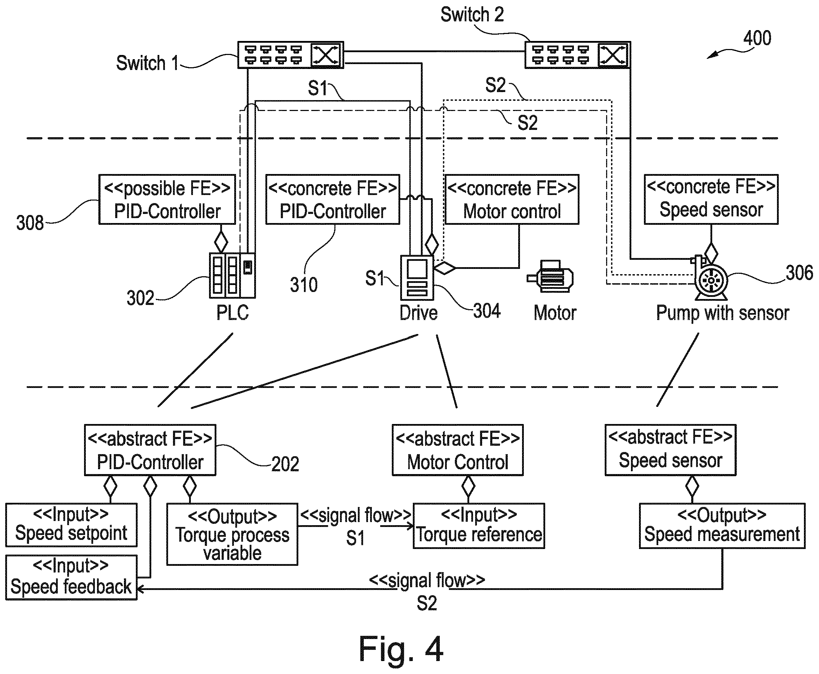

Fig. 4 shows the non-limiting example of fig. 3 expanded to include communication options for the two alternative mappings of abstract FEs to concrete FEs. The communication configuration module 106 identifies physical network infrastructure 400 interconnecting the PLC 302, the drive 304, and the pump 306. The network infrastructure 400 comprises interconnected switches, Switch 1 and Switch 2. The communication configuration module 106 determines that, for the two alternative mappings, the abstract signal flows S1 and S2 may be implemented by the network infrastructure 400 in the following ways:
i) in the case that the PID controller 202 is mapped to the PID controller FE 308 of the PLC 302, abstract signal flow S1 is implemented via the path PLC 302 → Switch 1 → drive 304, while abstract signal flow S2 is implemented via the path pump 306 → Switch 2 → Switch 1 → PLC 302 (indicated in fig. 4 using a dashed line);
ii) in the case that the PID controller 202 is mapped to the PID controller 310 of the drive 304, abstract signal flow S1 is realized without network communication within the drive 302 itself, while abstract signal flow S2 is implemented via path pump 306 → Switch 2 → Switch 1 → drive 304 (indicated in fig. 4 using a dotted line).

In the case that signal flow requirements are specified, the communication configuration module 106 may interact with the networking infrastructure 400, e.g. the switches, the Centralized User Configuration (CUC), and so on, to negotiate possible implementations of the abstract signal flows, by negotiating for example time slots, offsets, priority classes of required communication flows, and so on. The non-functional requirements specified during the application engineering phase of the workflow, e.g. jitter requirements, may be used to assign abstract signal flows to already reserved communication capacity within the switches.

In some examples, the communication configuration module 106 may determine or ascertain the feasibility of the communication options, for example by validating that the network infrastructure 400 has the necessary capability. In case multiple mappings are possible, the engineer or the communication configuration module 106 may select an option using predetermined criteria, for example KPIs, e.g. the overall equipment needed, an estimated load on the network infrastructure, and so on.

The configuration deployment and monitoring module 108 is configured to deploy and optionally also to monitor the application and the communication configuration to the industrial automation system.

Deploying the application to the industrial automation system may comprise configuring the automation components and the network infrastructure to execute the application including its signal flow. Configuring the automation components may comprise using interfaces (e.g. FX interfaces) of the automation components to set up communications, for example Pub/Sub primitives for device-to-device communication (such as writer groups, data sets, etc.). Configuring the network infrastructure may be performed via the network CUC, which (together with the Centralized Network Controller (CNC)) may calculate schedules for the automation components. The automation components may be configured sequentially to, or in parallel to, the network infrastructure. Deployment may be performed once a preferred configuration has been selected manually or automatically.

The configuration deployment and monitoring module 108 may monitor the execution of the application by the industrial automation system, for example with reference to one or more KPIs, or based on the implemented signal flow. This provides an additional value to the end-user with no additional engineering effort. The monitoring may comprise monitoring application-specific parameters, device-specific parameters, or network-specific parameters. The configuration deployment and monitoring module 108 may reconfigure the automation components or network infrastructure in response to violation of one or more requirements, such as those described herein. For example, the CUC may reject the configuration or violate predefined ranges specified during the application engineering phase.

In summary, the system engineering tool 100 may be used by users such as engineering teams and project execution personnel to:
- describe the intended domain-specific application and its functional and non-functional requirements in a structured, machine-readable way;
- provide an engineering phase before actual equipment delivery or simulations-based ordering;
- automatically map abstract application-specific assets and functional entities to physical devices discovered e.g. during system commissioning;
- heuristically assist matching of OPC UA FX assets and FEs, their parameters and input/output signals;
- enable loading and designing new FEs on the fly based on the application requirements;
- configure communication streams for the identified concrete FEs and negotiate/adapt to network constraints;
- configure network-specific parameters of the system including priority and switch configuration;
- monitor the deployment of the generated configuration;
- monitor system parameters during the operational phase of the system, e.g. application-specific parameters (application KPIs, e.g., axis synchronization KPI, PID quality criteria), device-specific parameters (e.g. temperature, CPU load), and/or network-specific parameters (loss, jitter, delays).

The modules illustrated in fig. 1 may also correspond to steps of an engineering workflow, as indicated by the arrows in fig. 1.

The present disclosure is applicable in environments without a dedicated DCS with mostly single smart devices in the network enabling logical PLC-functionality within the devices or drives.

While the above examples have been described with reference to OPC UA, FLC, or Time-Sensitive Networking (TSN) standards, it will be understood that the examples are applicable to any industrial automation systems in which field devices, in particular communication between them, need to be configured to execute applications.

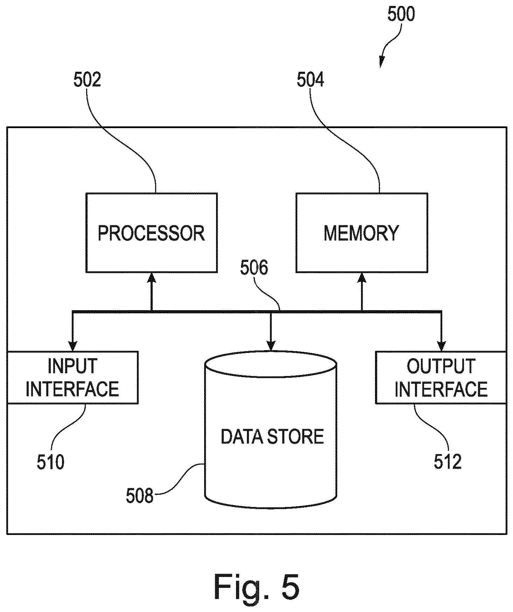

Fig. 5 illustrates an exemplary computing system 500 that can be used in accordance with the systems and methods disclosed herein. The computing system 500 may form part of or comprise any desktop, laptop, server, or cloud-based computing system. The computing system 500 includes at least one processor 502 that executes instructions that are stored in a memory 504. The instructions may be, for instance, instructions for implementing functionality described as being carried out by one or more components described herein or instructions for implementing one or more of the methods described herein. The processor 502 may access the memory 504 by way of a system bus 506. In addition to storing executable instructions, the memory 504 may also store conversational inputs, scores assigned to the conversational inputs, etc.

The computing system 500 additionally includes a data store 508 that is accessible by the processor 502 by way of the system bus 506. The data store 508 may include executable instructions, log data, etc. The computing system 500 also includes an input interface 510 that allows external devices to communicate with the computing system 500. For instance, the input interface 510 may be used to receive instructions from an external computer device, from a user, etc. The computing system 500 also includes an output interface 512 that interfaces the computing system 500 with one or more external devices. For example, the computing system 500 may display text, images, etc. by way of the output interface 512.

It is contemplated that the external devices that communicate with the computing system 500 via the input interface 510 and the output interface 512 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 500 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 500 may be a distributed system. Thus, for instance, several devices may be in communication by way of a network connection and may collectively perform tasks described as being performed by the computing system 500.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It will be appreciated that the aforementioned circuitry may have other functions in addition to the mentioned functions, and that these functions may be performed by the same circuit.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The word "comprising" does not exclude other elements or steps.

The indefinite article "a" or "an" does not exclude a plurality. In addition, the articles "a" and "an" as used herein should generally be construed to mean "one or more" unless specified otherwise or clear from the context to be directed to a singular form.

A single processor or other unit may fulfil the functions of several items recited in the claims.

The mere fact that certain measures are recited in mutually different dependent claims does not indicate that a combination of these measures cannot be used advantageously.

A computer program may be stored/distributed on a suitable medium, such as an optical storage medium or a solid-state medium supplied together with or as part of other hardware, but may also be distributed in other forms, such as via the internet or other wired or wireless communications systems.

Any reference signs in the claims should not be construed as limiting the scope.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "X comprises A and/or B" is satisfied by any of the following instances: X comprises A; X comprises B; or X comprises both A and B.

## Claims

1. A computer-implemented system engineering method for an industrial automation system, the method comprising:
performing application engineering (102), comprising enabling a user to create an abstract application model for an application to be executed by the industrial automation system, wherein the abstract application model represents signal flow between functional entities, wherein the method is **characterized in that** it further comprises the steps of:
performing asset matching (104), comprising mapping the functional entities of the user-created abstract application model to available automation components of the industrial automation system and mapping the signal flow to available network infrastructure, wherein performing asset matching comprises identifying possible matches between functional entities of the abstract application model and available automation components, wherein performing asset matching (104) further comprises performing signal mapping to map signals used by the functional entities of the abstract application model with those used by the available automation components; and
deploying (108) the application to the industrial automation system, comprising configuring the automation components and the network infrastructure to execute the application including its signal flow.

2. The method of claim 1, wherein the abstract application model comprises elements representing functional entities, elements representing inputs and outputs of the functional entities, and elements representing signal flow between the inputs and outputs.

3. The method of claim 1 or 2, wherein the abstract application model comprises graphical elements providing a graphical representation of the application.

4. The method of any preceding claim, wherein performing application engineering (102) comprises providing a library of user-selectable elements for inclusion in the abstract application model.

5. The method of any preceding claim, wherein performing asset matching (104) comprises performing asset discovery to discover available automation components and/or network infrastructure in the industrial automation system.

6. The method of any preceding claim, wherein performing asset matching (104) further comprises identifying certain matches between functional entities of the abstract application model and available automation components, wherein certain matches relate to fixed functionality of the available automation components and possible matches relate to optional functionality of the available automation components.

7. The method of any preceding claim, further comprising, before deploying the application to the industrial automation system, determining a communication configuration for configuring the automation components and the network infrastructure to implement the signal flow.

8. The method of claim 7, wherein determining the communication configuration comprises interacting with the network infrastructure to negotiate one or more possible implementations of the signal flow.

9. The method of claim 8, wherein the negotiating comprises determining one or more time slots, offsets, or priority classifications for the signal flow.

10. The method of any preceding claim, further comprising monitoring the execution of the application and/or signal flow in the industrial automation system.

11. The method of claim 10, wherein the monitoring comprises monitoring one or more application-specific parameters, device-specific parameters, or network-specific parameters.

12. The method of 10 or 11, further comprising reconfiguring the automation components or network infrastructure in response to violation of one or more requirements detected during the monitoring.

13. A computer-implemented system engineering tool configured to perform the method of any preceding claim.

14. A computer-readable medium comprising instructions which, when executed by a computing system, cause the computing system to perform the method of any of claims 1-12.

## Patentansprüche

1. Ein computerimplementiertes Systemengineering-Verfahren für ein industrielles Automatisierungssystem, wobei das Verfahren umfasst:
Durchführung einer Applikationsengineering (102), die es einem Benutzer ermöglicht, ein abstraktes Anwendungsmodell für eine vom industriellen Automatisierungssystem auszuführende Anwendung zu erstellen, wobei das abstrakte Anwendungsmodell den Signalfluss zwischen funktionalen Einheiten darstellt, wobei das Verfahren **dadurch gekennzeichnet ist, dass** es ferner die folgenden Schritte umfasst:
Durchführung eines Asset-Matching (104), das die Zuordnung der funktionalen Einheiten des vom Benutzer erstellten abstrakten Anwendungsmodells zu verfügbaren Automatisierungskomponenten des industriellen Automatisierungssystems und die Zuordnung des Signalflusses zur verfügbaren Netzwerkinfrastruktur umfasst, wobei das Durchführen der Asset-Zuordnung das Identifizieren möglicher Übereinstimmungen zwischen funktionalen Einheiten des abstrakten Anwendungsmodells und verfügbaren Automatisierungskomponenten umfasst, wobei das Durchführen der Asset-Matching (104) ferner das Durchführen einer Signalzuordnung umfasst, um Signale, die von den funktionalen Einheiten des abstrakten Anwendungsmodells verwendet werden, denen zuzuordnen, die von den verfügbaren Automatisierungskomponenten verwendet werden; und
Bereitstellen (108) der Anwendung im industriellen Automatisierungssystem, umfassend das Konfigurieren der Automatisierungskomponenten und der Netzwerkinfrastruktur zur Ausführung der Anwendung einschließlich ihres Signalflusses.

2. Verfahren nach Anspruch 1, wobei das abstrakte Anwendungsmodell Elemente umfasst, die funktionale Einheiten darstellen, Elemente, die Ein- und Ausgänge der funktionalen Einheiten darstellen, und Elemente, die den Signalfluss zwischen den Ein- und Ausgängen darstellen.

3. Verfahren nach Anspruch 1 oder 2, wobei das abstrakte Anwendungsmodell grafische Elemente umfasst, die eine grafische Darstellung der Anwendung bereitstellen.

4. Verfahren nach einem der vorstehenden Ansprüche, wobei das Durchführen von Applikationsengineering (102) das Bereitstellen einer Bibliothek von benutzerauswählbaren Elementen zur Einbindung in das abstrakte Anwendungsmodell umfasst.

5. Verfahren nach einem der vorstehenden Ansprüche, wobei das Durchführen des Asset-Matching (104) das Durchführen einer Asset-Erkennung umfasst, um verfügbare Automatisierungskomponenten und/oder Netzwerkinfrastruktur im industriellen Automatisierungssystem zu ermitteln.

6. Verfahren nach einem der vorstehenden Ansprüche, wobei das Durchführen des Asset-Matching (104) ferner das Identifizieren bestimmter Übereinstimmungen zwischen funktionalen Entitäten des abstrakten Anwendungsmodells und verfügbaren Automatisierungskomponenten umfasst, wobei sich bestimmte Übereinstimmungen auf feste Funktionalitäten der verfügbaren Automatisierungskomponenten beziehen und mögliche Übereinstimmungen sich auf optionale Funktionalitäten der verfügbaren Automatisierungskomponenten beziehen.

7. Verfahren nach einem der vorstehenden Ansprüche, das ferner umfasst, vor der Bereitstellung der Anwendung im industriellen Automatisierungssystem eine Kommunikationskonfiguration zu bestimmen, um die Automatisierungskomponenten und die Netzinfrastruktur derart einzurichten, dass der Signalfluss implementiert wird.

8. Verfahren nach Anspruch 7, wobei das Bestimmen der Kommunikationskonfiguration das Interagieren mit der Netzwerkinfrastruktur umfasst, um eine oder mehrere mögliche Implementierungen des Signalflusses auszuhandeln.

9. Verfahren nach Anspruch 8, wobei das Aushandeln das Bestimmen eines oder mehrerer Zeitschlitze, Offsets oder Prioritätsklassifizierungen für den Signalfluss umfasst.

10. Verfahren nach einem der vorstehenden Ansprüche, das ferner das Überwachen der Ausführung der Anwendung und/oder des Signalflusses im industriellen Automatisierungssystem umfasst.

11. Verfahren nach Anspruch 10, wobei die Überwachung das Überwachen eines oder mehrerer anwendungsspezifischer Parameter, gerätespezifischer Parameter oder netzwerkspezifischer Parameter umfasst.

12. Verfahren nach Anspruch 10 oder 11, das ferner das Neukonfigurieren der Automatisierungskomponenten oder der Netzwerkinfrastruktur als Reaktion auf die Verletzung einer oder mehrerer Anforderungen umfasst, die während der Überwachung festgestellt wurden.

13. Ein computerimplementiertes Systemengineering-Werkzeug, das zur Durchführung des Verfahrens eines der vorstehenden Ansprüche eingerichtet ist.

14. Ein computerlesbares Medium, das Anweisungen enthält, die, wenn sie von einem Computersystem ausgeführt werden, bewirken, dass das Computersystem das Verfahren gemäß einem der Ansprüche 1 bis 12 ausführt.

## Revendications

1. Procédé, mis en œuvre par ordinateur, d'ingénierie des systèmes pour un système d'automatisation industrielle, le procédé comprenant :
la réalisation d'une ingénierie (102) d'application, comprenant le fait de permettre à un utilisateur de créer un modèle d'application abstrait pour une application devant être exécutée par le système d'automatisation industrielle, le modèle d'application abstrait représentant un flux de signaux entre des entités fonctionnelles, le procédé étant **caractérisé en ce qu'**il comprend en outre les étapes de :
réalisation d'une mise en correspondance (104) d'actifs, comprenant l'association des entités fonctionnelles du modèle d'application abstrait créé par l'utilisateur à des composants d'automatisation disponibles du système d'automatisation industrielle et l'association du flux de signaux à l'infrastructure de réseau disponible, la réalisation de la mise en correspondance d'actifs comprenant l'identification de correspondances possibles entre des entités fonctionnelles du modèle d'application abstrait et des composants d'automatisation disponibles, la réalisation d'une mise en correspondance (104) d'actifs comprenant en outre la réalisation d'un mappage de signaux pour associer des signaux utilisés par les entités fonctionnelles du modèle d'application abstrait à ceux utilisés par les composants d'automatisation disponibles ; et
déploiement (108) de l'application dans le système d'automatisation industrielle, comprenant la configuration des composants d'automatisation et de l'infrastructure de réseau pour exécuter l'application y compris son flux de signaux.

2. Procédé selon la revendication 1, le modèle d'application abstrait comprenant des éléments représentant des entités fonctionnelles, des éléments représentant des entrées et des sorties des entités fonctionnelles, et des éléments représentant un flux de signaux entre les entrées et les sorties.

3. Procédé selon la revendication 1 ou 2, le modèle d'application abstrait comprenant des éléments graphiques fournissant une représentation graphique de l'application.

4. Procédé selon l'une quelconque des revendications précédentes, la réalisation d'une ingénierie (102) d'application comprenant la fourniture d'une bibliothèque d'éléments sélectionnables par l'utilisateur à inclure dans le modèle d'application abstrait.

5. Procédé selon l'une quelconque des revendications précédentes, la réalisation d'une mise en correspondance (104) d'actifs comprenant la réalisation d'une découverte d'actifs pour découvrir des composants d'automatisation disponibles et/ou une infrastructure de réseau dans le système d'automatisation industrielle.

6. Procédé selon l'une quelconque des revendications précédentes, la réalisation d'une correspondance d'actifs (104) comprenant en outre l'identification de certaines correspondances entre des entités fonctionnelles du modèle d'application abstrait et des composants d'automatisation disponibles, des correspondances certaines se rapportant à une fonctionnalité fixe des composants d'automatisation disponibles et des correspondances possibles se rapportant à une fonctionnalité facultative des composants d'automatisation disponibles.

7. Procédé selon l'une quelconque des revendications précédentes, comprenant en outre, avant de déployer l'application dans le système d'automatisation industrielle, la détermination d'une configuration de communication afin de configurer les composants d'automatisation et l'infrastructure de réseau pour mettre en œuvre le flux de signaux.

8. Procédé selon la revendication 7, la détermination de la configuration de communication comprenant une interaction avec l'infrastructure de réseau pour négocier une ou plusieurs mises en œuvre possibles du flux de signaux.

9. Procédé selon la revendication 8, la négociation comprenant la détermination d'un ou plusieurs intervalles de temps, décalages ou classifications de priorité pour le flux de signaux.

10. Procédé selon l'une quelconque des revendications précédentes, comprenant en outre la surveillance de l'exécution de l'application et/ou du flux de signaux dans le système d'automatisation industrielle.

11. Procédé selon la revendication 10, la surveillance comprenant la surveillance d'un ou plusieurs paramètres spécifiques à une application, spécifiques à un dispositif ou spécifiques à un réseau.

12. Procédé selon la revendication 10 ou 11, comprenant en outre la reconfiguration des composants d'automatisation ou de l'infrastructure de réseau en réponse à une violation d'une ou plusieurs exigences détectée pendant la surveillance.

13. Outil, mis en œuvre par ordinateur, d'ingénierie des systèmes, configuré pour réaliser le procédé selon l'une quelconque des revendications précédentes.

14. Support lisible par ordinateur comprenant des instructions qui, lorsqu'elles sont exécutées par un système informatique, amènent le système informatique à réaliser le procédé de l'une quelconque des revendications 1 à 12.
